# EUROPEAN PATENT APPLICATION

(11) **EP 4 764 633 A1**
(43) Date of publication of application: **24.06.2026**
(21) Application number: 24220604.3
(22) Date of filing: 17.12.2024
(51) Int. Cl.: G02B 6/13, G02F 1/00

(54) **A METHOD FOR PREPARING A PLURALITY OF OPTICAL STRUCTURES FOR TRANSFER PRINTING, A METHOD FOR TRANSFER PRINTING, AN ASSEMBLY OF OPTICAL STRUCTURES FOR TRANSFER PRINTING, AND AN OPTOELECTRONIC DEVICE**

(71) Applicant: Imec VZW, 3001 Leuven (BE); Universiteit Gent, 9000 Gent (BE)
(72) Inventor: ROELKENS, Gunther, 9260 Schellebelle (BE); XUE, Yu, 9000 Gent (BE)
(74) Representative: AWA Sweden AB

(57) **Abstract**

A method for preparing a plurality of optical structures (120) for transfer printing is provided, a method for transfer printing, an assembly of optical structures (320) for transfer printing, and an optoelectronic device comprising at least one of the plurality of optical structures (120) is provided. The method for preparing the plurality of optical structures (120) for transfer printing comprises: obtaining an assembling structure (110) comprising an optical material, wherein the assembling structure (110) comprises a pattern in the optical material, the pattern comprising trenches (130) at a first side (112) of the assembling structure (110) for defining the plurality of optical structures (120), each of the plurality of optical structures (120) comprising an interface surface (122) in the optical material, the interface surface (122) being arranged at the first side of the assembling structure (110); bonding the assembling structure (110) to a temporary bonding layer (140) and a temporary carrier layer (150), wherein the interface surface (122) and the trenches (130) faces the temporary bonding layer (140) and the temporary carrier layer (150), the temporary bonding layer (140) being arranged between the assembling structure (110) and the temporary carrier layer (150); and removing a portion of the assembling structure (110) in order to form and separate the plurality of optical structures (120), wherein the plurality of optical structures (120) are defined for transfer printing from the temporary carrier layer (150).

## Description

### TECHNICAL FIELD

The present description relates to, in general, transfer printing. In particular, the present description relates to a method for preparing a plurality of optical structures for transfer printing and to an assembly of optical structures which may be used for transfer printing. In addition, the present description relates to a method for transfer printing. Further, the present description relates to an optoelectronic device comprising at least one optical structure where the optical structure has been prepared by the method.

### BACKGROUND

Photonic integrated circuits (PIC) are increasingly used. The PICs provide a compact arrangement of photonic components which may be advantageously used in many applications.

PICs may include components for, e.g., detecting, generating, transporting, modifying, and processing light (electromagnetic radiation). The various components of the PIC may be arranged on a photonics chip, however the rapid scaling-up of PICs has introduced challenges in controlling and manipulating on-chip photonics components. These challenges stem from limitations posed by fabrication of all of the components of the PIC on the photonics chip. The challenges in PIC fabrication may result in components of the PIC functioning suboptimal or having suboptimal quality.

In response to these challenges, various methods have been explored to address these issues. For instance, the integration of optical materials that may result in improved quality and functionality of the components of the PIC. However, the integration of such optical materials on the photonics chip may introduce further challenges in forming an integrated chip comprising various materials.

### SUMMARY

It is an objective of the present inventive concept to facilitate transfer printing of optical structures. In particular, it is an objective to facilitate transfer printing of optical structures formed in a bulk material.

It is a further objective of the present description to provide high-quality optical structures for transfer printing.

It is a further objective of the present description to facilitate easy and/or low-cost manufacturing of optical structures for transfer printing.

These and other objectives of the inventive concept are at least partly met by the invention as defined in the independent claims. Preferred embodiments are set out in the dependent claims.

In the following, relative spatial terms such as "top", "bottom", "lower", "vertical" are to be understood as denoting locations or directions within a frame of reference of the plurality of optical structures. In particular, the terms may be understood in relation to a normal direction to a plane spanned by the plurality of optical structures. Correspondingly, terms such as "lateral" and "horizontal" are to be understood as locations or directions parallel to such plane.

According to a first aspect there is provided a method for preparing a plurality of optical structures for transfer printing, said method comprising:
obtaining an assembling structure comprising an optical material, wherein the assembling structure comprises a pattern in the optical material, the pattern comprising trenches at a first side of the assembling structure for defining the plurality of optical structures, each of the plurality of optical structures comprising an interface surface in the optical material, the interface surface being arranged at the first side of the assembling structure;
bonding the assembling structure to a temporary bonding layer and a temporary carrier layer, wherein the interface surfaces and the trenches face the temporary bonding layer and the temporary carrier layer, the temporary bonding layer being arranged between the assembling structure and the temporary carrier layer; and
removing a portion of the assembling structure in order to form and separate the plurality of optical structures, wherein the plurality of optical structures are defined for transfer printing from the temporary carrier layer.

The assembling structure may have a homogeneous material composition. Homogeneous is here intended to be seen as in contrast to a heterogeneous material composition. The assembling structure may be formed from a bulk substrate such as a wafer or a die. Bulk substrate may imply that a thickness of the bulk substrate is at least 50 µm.

The assembling structure may have a second side arranged opposite to the first side. The assembling structure may have a relatively large extension in a plane parallel to the first and second sides, with a thickness of the assembling structure being defined between the first and second sides.

It should be realized that obtaining the assembling structure comprising the plurality of optical structures may imply that the assembling structure is externally manufactured by a producer and that the assembling structure is obtained from the producer. Alternatively, obtaining the assembling structure comprising the plurality of optical structures may imply forming the assembling structure, including forming the pattern at the first side of the assembling structure.

In some embodiments, the assembling structure may comprise a carrier structure and an optical material structure arranged on a first side of the carrier structure, the optical material structure comprising the optical material. The carrier structure and the optical material structure may both extend, in parallel, over the entire plane of the assembling structure. The optical material structure may have a homogeneous material composition, while the carrier structure may comprise any material suitable for the carrier structure. The optical material structure may be formed from a bulk substrate such as a wafer or a die. The optical material structure may comprise the trenches defining the plurality of optical structures. The trenches may extend through the entire thickness of the assembling structure, such that the plurality of optical structures are not physically connected to each other via the assembling structure. However, the plurality of optical structures are all arranged on the first side of the carrier structure and thereby inter-related.

The plurality of optical structures may for example be referred to as coupons or optical components.

The plurality of optical structures being defined by the trenches in the assembling structure implies that the plurality of optical structures are formed from the assembling structure. Thus, the plurality of optical structures are, at least before the step of removing a portion of the assembling structure, physically connected to each other and forming part of a coherent assembling structure.

Each of the plurality of optical structures may be any component that is intended to be integrated on a target substrate to form at least one target device. The at least one target device may for example be an optical device, a photonic device, or an optoelectronic device.

The plurality of optical structures may be arranged in a plane such that the plurality of optical structures are displaced laterally from each other within the plane. An area of the interface surfaces may refer to a combined area of geometrically common sides for all the optical structures of the plurality of optical structures.

The term transfer printing, which may also be referred to as micro-transfer printing, is used for referring to a process of transferring at least one optical structure of the plurality of optical structures from an initial substrate to a target substrate. Before the transfer, the optical structure is arranged on and coupled to the initial substrate. After the transfer, the optical structure is arranged on and coupled to the target substrate. For example, an optical structure may be transferred by coupling a stamp to the optical structure. After being coupled to the stamp, the optical structure is decoupled from the initial substrate as the stamp lifts the optical structure from the initial substrate. The lifting of the optical structure will thus only work if the stamp is coupled to the optical structure stronger than the optical structure is coupled to the initial substrate. The optical structure may subsequently be arranged on and coupled to the target substrate and decoupled from the stamp. For instance, the target substrate may comprise at least part of at least one target device such that the optical structure being transferred to the target substrate may be integrated thereon and may be coupled to other elements or components on the target substrate to form the at least one target device on the target substrate. In this manner, the optical structure may be processed separately at the initial substrate, and subsequently integrated on the target substrate via transfer printing of the optical structure(s) from the initial substrate to the target substrate. As an alternative, different optical structures may be separately processed at different initial substrates, such as a first initial substrate and a second initial substrate. Then, an optical structure from the first initial substrate may be transferred by transfer printing from the first initial substrate to the target substrate followed by an optical structure from the second initial substrate being transferred by transfer printing from the second initial substrate to the target substrate.

The target substrate may for example be a photonic integrated circuit (PIC), a flexible substrate, or an electronics integrated circuit. The at least one target device formed on the target substrate may for example be an optical device, an optoelectronic device, a photonic device, a photonic micro-electromechanical system (MEMS) device.

It should further be realized that a single optical structure may be transferred to a particular target substrate, for example for forming an optoelectronic device. Thus, each optical structure of the plurality of optical structures may be transferred to different target substrates. However, it should be realized that in other embodiments, a portion of or all of the plurality of optical structures may be transferred to a common target substrate.

Each optical structure of the plurality of optical structures may be transferred one by one by transfer printing to the target substrate. Thus, the stamp may be configured to only pick up one optical structure of the plurality of optical structures. Alternatively, a portion of or all of the plurality of optical structures may be transferred at the same time from the same initial substrate to a common target substrate. In other words, a stamp may be configured to simultaneously couple to a portion of or all of the plurality of optical structures and transfer said optical structures.

Preparing the plurality of optical structures for transfer printing is thus to be understood as forming the plurality of optical structures on the initial substrate from which the plurality of optical structures are to be transfer printed, the initial substrate comprising at least the temporary carrier layer. The plurality of optical structures may thus be, either individually or several at the same time, coupled to the stamp and decoupled from the initial substrate.

Preparing the plurality of optical structures for transfer printing does not necessarily imply that the plurality of optical structures are fully prepared for transfer printing, and additional steps may be added to further enable the plurality of optical structures to be coupled to the stamp and decoupled from the initial substrate.

It is a realization that the assembling structure, from which the plurality of optical structures to be transfer printed are formed, may comprise any optical material and have a homogeneous material composition. The method thus enables forming and transfer printing of optical structures of high-quality optical material for subsequent integration with for example photonic and optoelectronic devices. Such integration may require the plurality of optical structures to form interfaces with other components, for example semiconductor components, typically silicon. Traditional methods of growing optical components directly on semiconductors may negatively impact both the quality of the interfaces and of the optical components. By separately forming the plurality of optical structures from homogeneous optical materials that may have the highest quality and subsequently transfer printing them, high quality optical components and interfaces can be realized.

Further, growing of optical components directly on a semiconductor device may not always be possible for any optical material. Thus, it is a realization that the method for preparing the plurality of optical structures for transfer printing may enable transfer printing and integrating optical components comprising optical materials that otherwise could not be integrated as optical components to the semiconductor device.

A further advantage of the method is that the interface surface of each of the plurality of optical structures is covered by the temporary bonding layer, thus protecting it from abrasion and particulates during further handling of the plurality of optical structures until the point they are transfer printed. Protecting the interface surface helps maintain a pristine and high quality interface surface. The quality of the interface surface may be of high importance for the functionality of any device on which it is integrated.

It is a further realization that the method facilitates easier and lower cost manufacturing of devices comprising optical components since the plurality of optical structures can be formed in systems dedicated for the forming of optical components. The plurality of optical structures being formed from the assembling structure also imply that the plurality of optical structures may be manufactured in a fast manner.

The optical material of the assembling structure may be any material that is suitable as an optical component, such as an optical component, for example a waveguide, of an optoelectronic device,. Thus, the optical material may be used for providing a desired function on electromagnetic radiation, such as ultraviolet light, visible light and/or infrared light. The desired function may be dependent on application and may for instance relate to amplification, absorption, phase shifting in a reciprocal or non-reciprocal manner, elastic or inelastic scattering, phase modulation or amplitude modulation of the electromagnetic radiation. The optical material may for instance be at least partially transparent to at least some wavelengths of the electromagnetic radiation. For example, the optical material may comprise Barium Titanate Crystal (BTO), Bismuth-doped rare-earth iron garnet (BIG), Lithium Niobate, periodically poled lithium niobate, Yttrium aluminum garnet crystals (YAG), and diamond.

The assembling structure may be formed by a piece of homogeneous optical material that is realized using known crystal generation techniques, followed by slicing and polishing, and/or ion implantation based cutting.

It is to be understood that the pattern in the optical material is formed by the trenches. Each optical structure of the plurality of optical structures may be defined in shape and size in the plane spanned by the plurality of optical structures by the trenches.

It should be realized that separate trenches may be provided for individually defining each optical structure of the plurality of optical structures. However, according to an alternative, a trench may define a boundary between two adjacent optical structures and the trench may thus be shared for defining the plurality of optical structures.

For instance, the pattern defined by the trenches may comprise lines extending along a direction parallel to the first side of the assembling structure. The pattern may be formed by two sets of parallel lines, wherein the lines of different sets are perpendicular to each other. This implies that the trenches may be configured to surround rectangular-shaped optical structures of the plurality of optical structures. However, it should be realized that the trenches may have any layout for forming an arbitrary shape of the optical structures of the plurality of optical structures.

The trenches may not be formed through an entire thickness of the assembling structure such that the plurality of optical structures are physically connected and form part of the coherent assembling structure.

A trench depth may be 10-100 µm, preferably 10-50 µm, more preferably 10-20 µm.

Bonding the assembling structure to the temporary bonding layer and the temporary carrier layer may comprise depositing the temporary bonding layer for example by spin-coating or spray-coating on the temporary carrier layer, or on the assembling structure, or on both. Bonding may comprise any combination of baking, heating up, and applying pressure to any combination of the assembling structure, the temporary carrier layer, and the temporary bonding layer. Further, bonding may comprise curing the temporary bonding layer, for example in a nitrogen gas environment.

As described above, the trenches may define a shape of the plurality of optical structures. However, the trenches may not be formed through an entire thickness of the assembling structure. Thus, the plurality of optical structures are still physically connected and the assembling structure forms a single coherent piece when bonding the assembling structure to the first temporary bonding layer and the first temporary carrier layer.

The temporary bonding layer may thus cover at least the interface surfaces of the plurality of optical structures such that it extends over an entire area of the interface surfaces.

The temporary bonding layer may comprise a commercially available material for temporary bonding, for example a photoresist (for example the resist Ti35E photoresist from MicroChemicals GmbH, AZ^{®} 10XT from MicroChemicals GmgH, AZ^{®} 5214E from MicroChemicals GmbH, ma-N 2410 from Micro Resist Technologies) or any material that is suitable for bonding the temporary carrier layer and the assembling structure may be used, preferably a polymer.

The method for preparing the plurality of optical structures for transfer printing described above may comprise additional steps to the steps described above in order for the plurality of optical structures to be fully prepared for transfer printing. However, this does not imply that the additional steps are mandatory in forming part of a method for preparing the plurality of optical structures for transfer printing. Rather, any additional steps are to be seen as further preparation.

According to a second aspect, there is provided an assembly of optical structures for transfer printing, the assembly comprising:
a temporary carrier layer;
a plurality of optical structures, each one of the plurality of optical structures comprising an interface surface and a back surface, the plurality of optical structures being distributed horizontally from each other and being connected to a temporary bonding layer for bonding the plurality of optical structures to the temporary carrier layer, the interface surface of each of the plurality of optical structures being substantially parallel to and facing a first side of the temporary carrier layer; and
for each one of the plurality of optical structures, a respective encapsulating layer at least partially encapsulating the optical structure and extending over the back surface of the optical structure and comprising at least one tether, the tether being connected to the first side of the temporary carrier layer,
wherein the at least one tether is configured to break when a sufficient lifting force is applied to the respective one of the plurality of optical structures and the respective encapsulating layer in order to facilitate lifting of the plurality of optical structures from the temporary carrier layer.

In other words, there is a temporary bonding layer between the first side of the temporary carrier layer and each of the respective interface surfaces of each of the plurality of optical structures. The temporary bonding layer is at least partially enveloped by the respective encapsulating layer.

The temporary bonding layer is suitable for being removed without affecting the interface surface, such that a high quality interface surface may be provided by each of the plurality of optical structures, when the optical structures are to be transfer printed. After removal of the temporary bonding layer, each of the plurality of optical structures may be fixed at the vertical separation distance from the first side of the temporary carrier layer by the back surface of each of the plurality of optical structures being connected to the respective encapsulating layer. In a sense, each of the plurality of optical structures is then suspended opposite the temporary carrier layer by the respective encapsulating layer.

The encapsulating layer may comprise a dielectric material, for example low temperature silicon nitride, or a polymer.

The at least one tether of the encapsulating layer is configured to be sufficiently robust to maintain the corresponding optical structure of the plurality of optical structures in substantially the same position relative the temporary carrier layer. The at least one tether of the encapsulating layer is further configured to be brittle enough to break once the stamp applies a sufficient lifting force to the encapsulating layer and the respective one of the plurality of optical structures.

The temporary carrier layer may have a second side oppositely arranged the first side of the temporary carrier layer. The first side and the second side of the temporary carrier layer is arranged parallel to a plane of the temporary carrier layer. The temporary carrier layer may be a rigid material, for example, but not limited to silicon, quartz, fused quartz, fused silica.

An assembly of optical structures according to the second aspect may have the same advantages, or similar advantages, as the advantages described in conjunction with the first aspect.

The assembly may provide an intermediate product that may be useful in manufacturing of an end product. For instance, the assembly may be delivered as an intermediate product to a facility or product line wherein the plurality of optical structures are to be arranged on one or more target substrates for forming target devices or end products. Thus, the assembly of optical structures may even be manufactured in a separate manufacturing facility from a facility where the end product is produced.

Effects and features of this second aspect are largely analogous to those described above in connection with the first aspect. Embodiments mentioned in relation to the first aspect are largely compatible with the second aspect.

The method may comprise, prior to or during the bonding of the assembling structure, depositing a protective layer to cover a first side of the assembling structure, the first side of the assembling structure comprising the interface surfaces and the trenches of the optical material.

Depositing the protective layer may comprise for example spin-coating or spray-coating the protective layer on the first side of the assembling structure.

The protective layer may comprise the same material as the temporary bonding layer or a different material. After being deposited, the protective layer and the assembling structure may be bonded to the temporary bonding layer and the temporary carrier layer during the step of bonding the assembling structure to the temporary bonding layer and the temporary carrier layer such that the protective layer faces the temporary bonding layer and the temporary carrier layer.

Alternatively, the protective layer may be formed by the temporary bonding layer. In other words, depositing of the protective layer on the assembling structure may be achieved by depositing the temporary bonding layer on the assembling structure. In such case, the temporary bonding layer forming the protective layer may, after being deposited on the assembling structure, be bonded to the temporary carrier layer during the step of bonding the assembling structure to the temporary bonding layer and the temporary carrier layer.

The protective layer may comprise a commercially available material for temporary bonding, for example a photoresist (for example the resist Ti35E photoresist from MicroChemicals GmbH, AZ 10XT from MicroChemicals GmbH ,AZ 5214E from MicroChemicals GmbH, ma-N 2410 from Micro Resist Technologies) or other polymers.

The protective layer serves as a physical barrier that prevents particulates and debris from collecting on and around the plurality of optical structures and in the trenches of the optical material. During the different steps of the method, particulates and debris are likely to get distributed on and around the plurality of optical structures and in the trenches of the optical material, which are unintentional but difficult to avoid side effects of the handling steps. Applying the protective layer early during the method ensures that the plurality of optical structures are fully or at least partially, preferably at least the interface surfaces, shielded from being in contact with such particulates and debris.

The particulates and debris may, if in contact with the plurality of optical structures, negatively impact the quality of the plurality of optical structures. For example, the quality of the interface surfaces may be negatively impacted when particulates and debris interfere with optical transmission or cause the interface surfaces to become more rough.

The depositing of the protective layer implies that the trenches in the optical material are filled. Hence, the protective layer may not leave any room for particulates formed during removing of a portion of the assembling structure to reach the interface surfaces of the optical structures and to affect the quality of the interface surfaces.

According to another embodiment, the method comprises, prior to or during bonding of the assembling structure, filling the trenches by a protective material. This may be achieved by the depositing of the protective layer. However, filling of the trenches may alternatively be achieved by material of the temporary bonding layer arranged on the temporary carrier layer entering the trenches during bonding of the assembling structure to the temporary bonding layer and the temporary carrier layer.

The interface surface may be configured to be an optical interface.

In other words, the interface surface may be configured to, once integrated with the at least one target device, couple electromagnetic radiation between a medium and the corresponding optical structure of the plurality of optical structures or may reflect electromagnetic radiation incident on the optical interface. The optical interface may thus be a smooth surface. A smooth surface may for example imply that a root mean square (RMS) average of a surface profile height deviation from the mean line is below 10 nm, preferably below 1 nm. The smooth surface of the optical interface may minimize scattering of electromagnetic radiation at the optical interface.

For example, the interface surface may form an optical interface between the corresponding optical structure of the plurality of optical structures and other elements or components on the target substrate forming the at least one target device on the target substrate to which the plurality of optical structures are to be transfer printed. Each optical structure of the plurality of optical structures may thus form an optical component, such as a waveguide, of the at least one target device, wherein the optical interface is configured to transmit electromagnetic radiation between the optical component and other elements or components of the target device.

Obtaining the assembling structure may comprise forming the interface surfaces.

The interface surface may for example be formed by lapping, also known as thinning or polishing, the first side of the assembling structure until a desired smoothness of the surface is achieved. An advantage of forming the interface surface is that it offers increased control over the quality of the interface surface by choosing the type of polishing and controlling the parameters of the polishing.

In addition, the method for preparing of the plurality of optical structures for transfer printing allows the optical structures to be prepared for transfer printing without affecting the interface surface. Thus, a high quality interface surface, such as a smooth surface, may be prepared before the assembling structure is further processed to prepare a plurality of optical structures for transfer printing. The method for preparing of the plurality of optical structures for transfer printing is configured to maintain a pristine interface surface.

This also further enables the steps of the method relating to the forming of the plurality of optical structures to be done subsequently to forming of the high quality interface surface, which may result in a lower cost and/or easier manufacturing.

Obtaining the assembling structure may comprise forming the pattern in the optical material at the first side of the assembling structure by forming the trenches in the optical material at the first side of the assembling structure.

Forming the trenches in the optical material may comprise selectively removing material, for example dicing and/or etching. Alternatively, the trenches may be formed by selectively forming the optical material of the assembling structure. For example, forming the trenches may be achieved by selectively growing or synthesizing the assembling structure such that trenches are formed. Alternatively, the optical material of the assembling structure may be selectively deposited on an assembling substrate such that trenches are formed between the regions of the assembling substrate where the optical material is not deposited.

If the method comprises the step of forming the interface surfaces and the step of forming the trenches, the step of forming the trenches may preferably be done after the step of forming the interface surface.

An advantage of forming the trenches in the optical material is that it offers increased control over dimensionality and shape of the plurality of optical structures defined by the pattern. This facilitates a method that can be tailored to varying requirements in the plurality of optical structures. It also further enables the steps of the method relating to forming of the plurality of optical structures to be done subsequently to forming of the trenches, which may result in a lower cost and/or easier manufacturing.

Forming the trenches may comprise selectively removing material from a first side of a substrate comprising the optical material.

In other words, the assembling structure may be formed from the substrate comprising the optical material by selectively removing material from the first side of the substrate. The substrate may be for example a wafer or a die.

Selectively removing material may comprise for example selectively etching or partially dicing the first side of the substrate. Dicing may comprise for example saw dicing, laser dicing or plasma dicing. Etching may comprise for example plasma etching. Plasma etching may comprise for example Fluoroform, CHF₃, Carbon tetrafluoride, CF₄, Hydrogen, H₂, Argon, Ar, or Sulfur hexafluoride, SF₆ plasma etching.

Prior to etching, an etch mask may be deposited on the first side of the substrate. The etch mask may be deposited for example by spin-coating or spray-coating. The etch mask may comprise a photoresist. The etching of the substrate may be done from the first side of the substrate and into the substrate, in a direction at least partially perpendicular to the first side of the substrate. A bottom of the trenches may be defined as the surface of the trenches farthest away from the interface surface of the plurality of optical structures of the assembling structure. For instance, the bottom of the trenches may have a normal parallel with a normal of the interface surface of the plurality of optical structures. The trench depth may be defined as the distance between the bottom of the trenches and the interface surface of the plurality of optical structures of the assembling structure in a direction substantially perpendicular to the first side of the substrate.

The substrate may have a homogeneous material composition. Homogeneous is here intended to be seen as in contrast to a heterogeneous material composition. The substrate may comprise the optical material. The optical material of the assembling structure may be any material that is suitable as an optical component of an optoelectronic device, for example a waveguide. For example, the optical material may comprise Barium Titanate Crystal (BTO), Bismuth-doped rare-earth iron garnet (BIG), Lithium Niobate, periodically poled Lithium Niobate, Yttrium aluminum garnet crystals (YAG), and diamond.

It is a realization that the substrate used for forming the assembling structure may be formed entirely independently from the at least one target substrate to which the plurality of optical structures may be transfer printed. Thus, the substrate may be formed using techniques that are the most suitable for forming the optical material, which may for example improve the quality of the optical material and/or reduce manufacturing costs and/or improve the manufacturing efficiency.

Removing a portion of the assembling structure may comprise thinning the assembling structure by removing material of the assembling structure from a second side of the assembling structure opposite the first side, wherein said thinning is performed at least until reaching a bottom of the trenches of the assembling structure.

Thus, after thinning the assembling structure, the trenches extend entirely through the assembling structure in a direction at least partially perpendicular to the first side of the assembling structure. In other words, the plurality of optical structures are no longer physically connected to each other via a common part of the assembling structure. The material of the assembling structure between each of the plurality of optical structures is thus removed by thinning the second side of the assembling structure at least until reaching a bottom of the trenches of the assembling structure.

The step of removing a portion of the assembling structure may also comprise removing a portion of each of the plurality of optical structures in order to make each of the plurality of optical structures thinner.

A thickness of each of the plurality of optical structures after the step of thinning the assembling structure may be between 5 to 100 µm, preferably 5 to 50 µm, more preferably 5 to 20 µm.

The thinning of the assembling structure may for example comprise chemical-mechanical polishing (CMP), and/or inductively coupled plasma (ICP) etching.

Thanks to the plurality of optical structures being bonded to the temporary carrier layer, the plurality of optical structures may be separated from each other while maintaining a relative position between the different optical structures of the plurality of optical structures.

The method may further comprise forming trenches in the temporary bonding layer by selectively removing a portion of the temporary bonding layer, whereby the trenches of the temporary bonding layer extend from the trenches of the assembling structure, thereby forming deepened trenches, wherein the temporary carrier layer forms a bottom of the deepened trenches, the deepened trenches defining a plurality of remaining portions of the temporary bonding layer arranged between each respective one of the plurality of optical structures and the temporary carrier layer.

In other words, a pattern comprising the trenches of the temporary bonding layer may be the same or substantially the same as the pattern comprising the trenches of the assembling structure. A width of the trenches of the temporary bonding layer may differ from a width of the trenches of the assembling structure. The plurality of remaining portions of the temporary bonding layer may thus have a similar shape as the plurality of optical structures.

In the case that the plurality of optical structures have been physically separated by performing the step of thinning the assembling structure, the trenches of the temporary bonding layer extending from the trenches of the assembling structure should be interpreted as the location of the trenches of the temporary bonding layer overlapping with the space between each of the plurality of optical structures.

Between each of the plurality of optical structures and the temporary carrier layer a respective one of the plurality of remaining portions of the temporary bonding layer is thus arranged. The plurality of optical structures are arranged such that the interface surface of each of the plurality of optical structures is arranged at substantially a same vertical separation distance from the first side of the temporary carrier layer.

Forming the trenches of the temporary bonding layer may enable physically separating the temporary bonding layer into the plurality of remaining portions of the temporary bonding layer such that each of the plurality of optical structures and the corresponding remaining portion of the temporary bonding may be individually processed.

Forming trenches in the temporary bonding layer may comprise exposing the temporary bonding layer to electromagnetic radiation.

The electromagnetic radiation may be ultraviolet (UV) radiation. The electromagnetic radiation may have a peak wavelength for example from 100 to 1000 nm, preferably from 200 to 450 nm, more preferably from 248 to 405nm.

The exposing the temporary bonding layer to electromagnetic radiation may be performed before the step of removing the portion of the assembling structure or after removing the portion of the assembling structure.

The electromagnetic radiation may be a laser beam. Accordingly, the electromagnetic radiation may be coherent radiation or formed in a coherent radiation source. Using a laser beam may allow accurate control over which parts of the temporary bonding layer are exposed to the electromagnetic radiation. However, the electromagnetic radiation is not limited to be a laser beam or to be coherent radiation. The electromagnetic radiation may be incoherent radiation for example from a light emitting diode (LED) or an ultraviolet (UV) lamp.

Further, forming the trenches is not limited to exposing the temporary bonding layer to electromagnetic radiation. Selectively removing a portion of the temporary bonding layer may for example also or alternatively comprise wet or dry etching.

The temporary carrier layer may be transparent to the electromagnetic radiation. Thus, the electromagnetic radiation may be transmitted through the temporary carrier layer for exposing the temporary bonding layer.

Exposing the temporary bonding layer to electromagnetic radiation may be advantageous due to its compatibility with scaling up the method to manufacturing of large volumes of optical structures.

The method may further comprise depositing an encapsulating layer on each one of the plurality of optical structures, the encapsulating layer at least partially encapsulating each respective optical structure and partially encapsulating each respective remaining portion of the temporary bonding layer and extending over a back surface of each respective optical structure arranged opposite the respective interface surface and extending a full depth of the deepened trenches, reaching the bottom of the deepened trenches.

Thus, each one of the plurality of optical structures together with its respective remaining portion of the temporary bonding layer may be individually encapsulated by the encapsulating layer. The encapsulating layer may be a continuous structure that extends both in a vertical and horizontal direction to laterally and horizontally envelop the respective one of the plurality of optical structures together with its respective remaining portion of the temporary bonding layer. The encapsulating layer may extend in a horizontal direction to cover an entire surface of the back surface of the plurality of optical structures. Additionally, the encapsulating layer may extend vertically along an inner wall of the deepened trenches. The encapsulating layer of any one of the plurality of optical structures together with its respective remaining portion of the temporary bonding layer may preferably not be in physical contact with the encapsulating layer of a different one of the plurality of optical structures together with its respective remaining portion. However, the encapsulating layer of different ones of the plurality of optical structures may alternatively be in physical contact. The at least one tether of the encapsulating layer of one of the plurality of optical structures may be at least partially physically separated from the at least one tether of the encapsulating layer of any other of the plurality of optical structures, such that breaking the at least one tether the encapsulating layer of the one of the plurality of optical structures does not imply breaking the at least one tether of the encapsulating layer of any other of the plurality of optical structures.

The encapsulating layer may comprise at least one opening for providing access through the encapsulating layer to the temporary bonding layer. In other words the temporary bonding layer may not be fully encapsulated. The at least one opening may enable for example an etchant to reach the temporary bonding layer, and for material of temporary bonding layer to be removed via the opening.

Depositing the encapsulating layer may comprise for example chemical or physical vapour deposition or spray or spin-coating.
The encapsulating layer may comprise for example low temperature silicon nitride or photoresist (for example the resist Ti35E photoresist from MicroChemicals GmbH, AZ 10XT from MicroChemicals GmbH, AZ 5214E from MicroChemicals GmbH, ma-N 2410 from Micro Resist Technologies).

The method may further comprise under-etching and removing the respective remaining portion of the temporary bonding layer between each one of the plurality of optical structures and the temporary carrier layer.

The under-etching etches and/or dissolves and removes the respective remaining portion of the temporary bonding layer so that the enveloping layer remains substantially unchanged. Thus, an empty space is formed between the first side of the temporary carrier layer and the respective interface surface of the respective optical structure of the plurality of optical structures, the empty space being at least partially enveloped by the encapsulating layers. The portion(s) of the encapsulating layer that envelops the empty space may be referred to as at least one tether. The at least one tether may extend in a vertical direction relative to the plane formed by the temporary carrier layer. Each of the plurality of optical structures is fixed at the vertical separation distance from the first side of the temporary carrier layer by the back surface of each of the plurality of optical structures being connected to the respective encapsulating layer via the at least one tether.

Under-etching may imply that an etchant reaches the corresponding remaining portion of the temporary bonding layer via the at least one hole of the corresponding encapsulating layer. The etchant may selectively etch the material of the corresponding remaining portion of the temporary bonding layer. The etched material of the corresponding remaining portion of the temporary bonding layer may be removed via the at least one hole of the corresponding encapsulating layer. The etchant may comprise for example solvents that do not affect the plurality of optical structures, in particular the interface surfaces.

Thus, after under-etching and removing the respective remaining portion of the temporary bonding layer, the plurality of optical structures are connected to the temporary carrier layer only via the at least one tether. The at least one tether is configured to break when a sufficient lifting force is applied to the respective one of the plurality of optical structures, enabling simple transfer printing of the plurality of optical structures by using the stamp to apply the lifting force.

The optical material may comprise barium titanate (BTO).

However, the optical material is not limited to comprising BTO and may comprise for example any combination of BTO, Bismuth-doped rare-earth iron garnet (BIG), Lithium niobate (LiNbOs), Lithium tantalate (LiTaOs), Yttrium aluminum garnet crystals (YAG), and diamond.

An advantage of the optical material comprising BTO is that it has a large Pockels coefficient, enabling for example a smaller electro-optic modulator if the plurality of optical structures are used in modulator devices. BIG is advantageous because of its low optical los, high magneto-optic coefficient and its wide commercial availability. LiNbOs and LiTaOs are advantageous because they are suited for high-speed modulation and have stable physical/chemical properties.

According to a third aspect there is provided a method for transfer printing, said method comprising:
the method for preparing the plurality of optical structures for transfer printing according to the first aspect; and
transferring at least one of the plurality of optical structures from the temporary carrier layer to a target substrate.

Transferring the at least one of the plurality of optical structures may comprise lifting the at least one of the plurality of optical structures from the temporary carrier layer and depositing it on the target substrate.

Effects and features of this third aspect are largely analogous to those described above in connection with the first aspect. Embodiments mentioned in relation to the first aspect are largely compatible with the third aspect.

Thanks to the plurality of optical structures being attached to the temporary carrier layer via the at least one tether, the lifting of the at least one of the plurality of optical structures from the temporary carrier layer may be simplified. The lifting force required to lift the at least one of the plurality of optical structures from the temporary carrier layer need only overcome the lifting force required to break the at least one tether.

The third aspect enables the transfer printing of the at least one of the plurality of optical structures wherein the at least one optical structure has a pristine and high quality interface surface that has been protected throughout the preparation of the at least one optical structure for transfer printing.

According to a fourth aspect there is provided an optoelectronic device, comprising at least one optical structure where the optical structure has been prepared by the method according to the first aspect and subsequently transfer printed onto the target substrate, the optical structure forming an optical component of the optoelectronic device.

Parts of the optoelectronic device may be fabricated separately from the at least one optical structure. For example parts of the optoelectronic device may be fabricated on the target substrate by standard semiconductor device processing methods, in particular processing comprising silicon. Such processing may not be compatible with the forming of the optical component, or may result in a lower quality optical component if the optical component is formed directly on the target substrate for example via thin film deposition. The method according to the first aspect enables separate forming of the optical component, and subsequent transfer printing of the optical component to the target substrate to form an optoelectronic device. Thus, the forming of the optical component may be done by processing techniques that are dedicated to the forming of the optical component in order to ensure higher quality of the optical component compared to if the optical component was formed directly on the target substrate, for example by thin film deposition.

The optical component may for example be used to form an optical modulator on the target substrate. The optical component may be arranged to optically couple to a waveguide on the target substrate. By the Pockels effect in the optical component, a phase shift may be induced in evanescent wave of the electromagnetic radiation leaking from the waveguide to the optical component, thus modulating the electromagnetic radiation. If the optical material of the optical component has a larger Pockels coefficient, a shorter optical component is required to cause a desired phase shift in the electromagnetic radiation.

Forming the optical component separately, for example by crystal growth, slicing and polishing may enable forming an optical component with a significantly higher Pockels coefficient as compared to forming one directly on the target substrate, for example by thin film deposition.

### BRIEF DESCRIPTION OF THE DRAWINGS

The above, as well as additional objects, features and advantages of the present inventive concept, will be better understood through the following illustrative and non-limiting detailed description, with reference to the appended drawings. In the drawings like reference numerals will be used for like elements unless stated otherwise.
Figs. 1a-b are schematic cross sections during steps for manufacturing of an assembly comprising a plurality of optical structures according to an embodiment.
Fig. 1c is a schematic top view of an assembling structure comprising a plurality of optical structures according to an embodiment.
Figs. 1d-h are schematic cross sections during steps of a method for preparing a plurality of optical structures for transfer printing according to an embodiment.
Figs. 2a-d are schematic cross sections during steps of a method for preparing a plurality of optical structures for transfer printing according to an embodiment.
Fig. 3 is a schematic cross section of an assembly comprising a plurality of optical structures according to an embodiment.
Figs. 4 a-e are schematic cross sections illustrating transfer printing from an assembly comprising a plurality of optical structures according to an embodiment.
Fig. 5 is a schematic cross section of an optoelectronic device comprising a transfer printed optical structure according to an embodiment.
Fig. 6 is a schematic cross section of an optoelectronic device comprising a transfer printed optical structure according to an embodiment.

### DETAILED DESCRIPTION

In cooperation with attached drawings, the technical contents and detailed description of the present invention are described thereinafter according to a preferable embodiment, being not used to limit the claimed scope. This invention may be embodied in many different forms and should not be construed as limited to the embodiments set forth herein; rather, these embodiments are provided for thoroughness and completeness, and fully convey the scope of the invention to the skilled person.

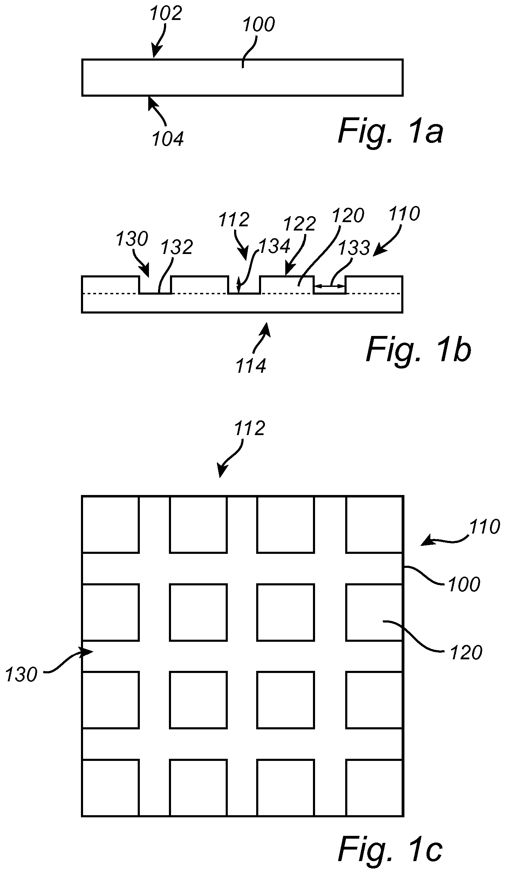

Referring to Figs. 1a-h, a method for preparing a plurality of optical structures 120 for transfer printing will be described. The method will be described as comprising a number of steps. However, it should be realized that some of these steps are optional and may not necessarily be performed or may be performed in various different ways. Thus, the detailed description of the method provided herein should not be construed as limiting the scope of protection, which is defined by the appended claims.

Referring to Fig. 1a, the method may in an initial optional step comprise obtaining a substrate 100 comprising an optical material. The substrate 100 comprises a first side 102 and an oppositely arranged second side 104. The obtaining of the substrate 100 may refer to obtaining the substrate 100 as fabricated from a provider or may refer to performing any number of processing steps required to produce the substrate 100. The substrate 100 may be for example a wafer or a die.

The method as described in further detail below in following steps comprises obtaining an assembling structure 110, bonding the assembling structure to a temporary bonding layer 140, and removing a portion of the assembling structure. The method may in this manner according to embodiments of the present description prepare a plurality of optical structures 120 for transfer printing.

As illustrated in Figs. 1b, the method thus comprises obtaining an assembling structure 110 comprising an optical material. The assembling structure 110 comprises a first side 112 and an oppositely arranged second side 114. The assembling structure 110 comprises a pattern in the optical material. The pattern comprises trenches 130 at the first side 112 of the assembling structure 110 for defining the plurality of optical structures 120. Each of the plurality of optical structures 120 comprises an interface surface 122 in the optical material. The interface surface 122 is arranged at the first side 112 of the assembling structure 110.

The trenches 130 comprise a bottom 132 which may be defined as the surface of the trenches 130 farthest away from the interface surface 122 of the plurality of optical structures 120 of the assembling structure 110, at a trench depth 134. For instance, the bottom 132 of the trenches 130 may have a normal parallel with a normal of the interface surface 122 of the plurality of optical structures 120.

The obtaining of the assembling structure 110 may refer to obtaining the assembling structure 110 as fabricated from a provider or may refer to performing any number of processing steps required to produce the assembling structure 110.

Thus, optionally, the obtaining of the assembling structure 110 may comprise forming the pattern in the optical material by forming the trenches 130 in the optical material. Forming the trenches 130 may comprise selectively removing material from a first side 102 of the substrate 100 comprising the optical material. In other words, the assembling structure 110 may be formed from the substrate 100 comprising the optical material by selectively removing material from the first side 102 of the substrate 100.

The interface surface 122 may be configured to be an optical interface. The interface surface 122 may be configured to couple electromagnetic radiation between a medium and the corresponding optical structure 120 of the plurality of optical structures 120. For example, the interface surface 122 may be a smooth surface. A smooth surface may for example imply that a root mean square (RMS) average of a surface profile height deviation from the mean line is below 10 nm, preferably below 1 nm.

Optionally, the obtaining of the assembling structure 110 may comprise forming the interface surfaces 122. The interface surfaces 122 may for example be formed by polishing the first side 112 of the assembling structure 110 until a desired smoothness of the surface is achieved. Forming of the interface surfaces 122 may be done before the optional step of forming the pattern in the optical material.

The optical material may comprise barium titanate (BTO).

Fig. 1c illustrates a top view of the first side 112 of the assembling structure 110 comprising the plurality of optical structures 120. The trenches 130 are seen to form the pattern, in this case a rectangular grid, that surrounds and thereby defines each of the plurality of structures 120 in the plane of the assembling structure 110.

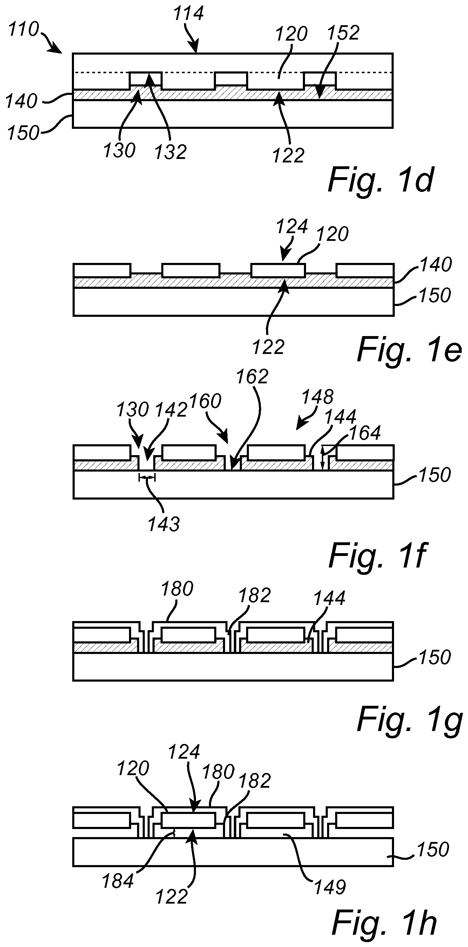

Referring to Fig. 1d, the method further comprises bonding the assembling structure 110 to a temporary bonding layer 140 and a temporary carrier layer 150. The interface surfaces 122 and the trenches 130 face the temporary bonding layer 140 and the temporary carrier layer 150. The temporary bonding layer 140 is arranged between the assembling structure 110 and the temporary carrier layer 150. The temporary bonding layer 140 may thus cover at least the interface surfaces 122 of the plurality of optical structures 120 such that it extends over an entire area of each of the interface surfaces 122.

The temporary carrier layer 150 has a first surface 152 that faces the temporary bonding layer 140 and the assembling structure 110.

Referring to Fig. 1e, the method further comprises removing a portion of the assembling structure 110 in order to form and separate the plurality of optical structures 120. The plurality of optical structures 120 are thus defined for transfer printing from the temporary carrier layer 150. By removing the portion of the assembling structure 110, a back surface 124 is formed on each of the plurality of optical structures 120, arranged opposite to the corresponding interface surface 122.

Optionally, removing of a portion of the assembling structure 110 may comprise thinning the assembling structure 110. Thinning comprises removing material of the assembling structure 110 from the second side 114 of the assembling structure 110 and said thinning is performed at least until reaching a bottom 132 of the trenches 130 of the assembling structure 110. Thus, after thinning the assembling structure 110, the trenches extend entirely through the assembling structure 110 in a direction at least substantially perpendicular to the first side 112 of the assembling structure 110. In other words, the plurality of optical structures 120 are no longer physically connected to each other via a coherent part of the assembling structure 110. The material of the assembling structure 110 between each of the plurality of optical structures 120 is thus removed by thinning the second side 114 of the assembling structure 110 at least until reaching the bottom 132 of the trenches 130 of the assembling structure 110.

Thanks to the plurality of optical structures 120 being bonded to the temporary carrier layer 150, the plurality of optical structures 120 may be separated from each other while maintaining a relative position between the different optical structures 120 of the plurality of optical structures 120.

Referring to Fig. 1f, in an additional optional step, the method may comprise forming trenches 142 in the temporary bonding layer 140 by selectively removing a portion of the temporary bonding layer 140. The trenches 142 of the temporary bonding layer 140 extend from the trenches 130 of the assembling structure, such that trenches 142 and trenches 130 together form deepened trenches 160. A bottom 162 of the deepened trenches 160 is formed by the temporary carrier layer 150. Thus, the trenches 142 of the temporary bonding layer 140 define a plurality of remaining portions 144 of the temporary bonding layer 140.

Each of the plurality of remaining portions 144 is thus arranged between a respective one of the plurality of optical structures 120 and the temporary carrier layer 150. In other words, each of the plurality of optical structures 120 is stacked on a respective one of the plurality of remaining portions 144, forming a stack 148 comprising one of the plurality of optical structures 120 and the respective one of the plurality of remaining portions 144. Each stack 148 is thus defined by the deepened trenches 160. The deepened trenches 160 extend vertically with respect to the plane of the temporary carrier layer 150 for a full depth 164. The full depth may be for example between 100nm and 20 micrometer.

In other words, a pattern comprising the trenches 142 of the temporary bonding layer may be the same or substantially the same as the pattern comprising the trenches 130 of the assembling structure. A width 143 of the trenches 142 of the temporary bonding layer may differ from a width 133 of the trenches of the assembling structure. The plurality of remaining portions of the temporary bonding layer may thus have a similar shape as the plurality of optical structures.

Optionally, the step of forming the trenches 142 in the temporary bonding layer 140 may comprise exposing the temporary bonding layer 140 to electromagnetic radiation.

The temporary carrier may be transparent to the electromagnetic radiation. Thus, the electromagnetic radiation may be transmitted through the temporary carrier layer for exposing the temporary bonding layer.

According to Fig. 1g, in an additional optional step, the method may comprise depositing an encapsulating layer 180 on each one of the plurality of optical structures 120. The encapsulating layer 180 at least partially encapsulates each respective optical structure 120 and partially encapsulates each respective remaining portion 144 of the temporary bonding layer 140. The encapsulating layer extends over the back surface 124 of the respective optical structure 120 and extends the full depth 164 of the deepened trenches 160, reaching the bottom 162 of the deepened trenches 160.

In other words, the encapsulating layer 180 at least partially, and individually, encapsulates each stack 148 comprising one of the plurality of optical structures 120 and a respective remaining portion 144 of the temporary bonding layer. The encapsulating layer 180 is connected to the first surface 152 of the temporary carrier layer 150. The encapsulating layer 180 may fully cover the back surface 124 of each of the plurality of optical structures 120. Thus, the encapsulating layer may extend both in a vertical and horizontal direction relative the plane of the temporary carrier layer.

The corresponding encapsulating layer 180 for one of stack 148 may either physically connected to or physically separated from the encapsulating layer 180 of any other stack 148. The encapsulating layer 180 may comprise at least one opening (not shown) to the corresponding remaining portion 144 of the temporary bonding layer 140. In other words the remaining portions 144 of the temporary bonding layer 140 may not be fully encapsulated by the encapsulating layer 180. The at least one opening may enable for example an etchant to reach the remaining portions 144 of the temporary bonding layer 140, and for the removal of material of remaining portions 144 of temporary bonding layer 140 via the at least one opening.

Depositing the encapsulating layer may comprise for example chemical or physical vapor deposition, spin coating or spray coating.
The encapsulating layer may comprise for example low temperature silicon nitride or a polymer.

According to Fig. 1h, in an additional optional step, the method may further comprise under-etching and removing the respective remaining portion 144 of the temporary bonding layer 140 between each one of the plurality of optical structures 120 and the temporary carrier layer 150.

Under-etching may imply that an etchant reaches the corresponding remaining portion 144 of the temporary bonding layer 140 via the at least one hole of the corresponding encapsulating layer 180. The etchant may selectively etch the material of the corresponding remaining portion 144 of the temporary bonding layer 140. The etched material of the corresponding remaining portion 144 of the temporary bonding layer 140 may be removed via the at least one hole of the corresponding encapsulating layer 180.

Selectively etching the material of the corresponding remaining portion 144 of the temporary bonding layer 140 implies that the encapsulating layer 180, the plurality of optical structures 120 and the temporary carrier layer 150 remain substantially unchanged. Thus, the portion of the stack 148 comprising the material of the temporary bonding layer 140 (the remaining portion 144) is removed. An empty space 149 is formed between the first side 152 of the temporary carrier layer, the respective interface surface 122 of the respective optical structure 120 of the plurality of optical structures 120. The empty space 149 corresponding to the volume of the removed remaining portion 144 of the temporary bonding layer 140. Thus, the empty space 149 is at least partially enveloped by the encapsulating layer 180.

The portion(s) of the encapsulating layer 180 that envelops the empty space 149 may be referred to as at least one tether 182. The at least one tether 182 extends in a vertical direction relative the plane formed by the temporary carrier layer 150. The at least one tether 182 connects the encapsulating layer 180 to the temporary carrier layer 150. Since the encapsulating layer 180 is also connected to the corresponding one of the plurality of optical structures 120, each of the plurality of optical structures 120 is fixed, by the encapsulating layer 180, at a vertical separation distance 184 from the first side 152 of the temporary carrier layer 150.

Thus, after under-etching and removing the respective remaining portion 144 of the temporary bonding layer 140 between each one of the plurality of optical structures 120 and the temporary carrier layer 150, an assembly is provided comprising the plurality of optical structures 120 connected to the temporary carrier layer 150 via the encapsulating layer 180.

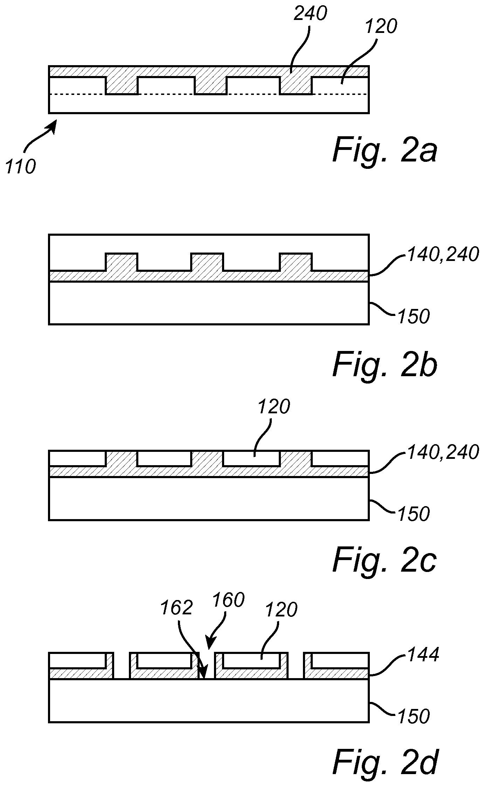

Referring to Fig. 2a, according to an embodiment, the method may comprise an optional step of, prior to or during the bonding of the assembling structure 110, depositing a protective layer 240 to cover the first side 112 of the assembling structure 110. Covering may imply covering an entire area of the first side 112, the area of the first side 112 comprising the interface surfaces 122 of the plurality of optical structures 120 and the trenches 130. The protective layer 240 may thus fill an entire volume of the trenches 130 of the assembling structure 110.

Referring to Fig. 2b, after being deposited, the protective layer 240 and the assembling structure 110 may be bonded to the temporary bonding layer 140 and the temporary carrier layer 150 during the previously described step of bonding the assembling structure 110 to the temporary bonding layer 140 and the temporary carrier layer 150. In some embodiments, the protective layer 240 may be the temporary bonding layer 140, and thus the step of bonding the assembling structure 110 may imply bonding the protective bonding layer to the temporary carrier layer. However, in some embodiments, the protective layer 240 and the temporary bonding layer may not be the same, and thus the assembling structure 110 and the protective layer 240 may be bonded to the temporary bonding layer 140 and the temporary carrier layer 150.

Alternatively, the protective layer may be formed by the temporary bonding layer. In other words, depositing of the protective layer on the assembling structure may be achieved by depositing the temporary bonding layer. In such case, the temporary bonding layer comprising the protective layer may, after being deposited on the assembling structure, be bonded to the temporary carrier layer during the step of bonding the assembling structure to the temporary bonding layer and the temporary carrier layer.

Referring to Fig. 2c, in embodiments comprising depositing the protective layer 240, the removing of a portion of the assembling structure 110 may further imply removing a portion of the protective layer and/or the temporary bonding layer.

Referring to Fig. 2d, in embodiments comprising depositing the protective layer 240, the deepened trenches 142 may be formed in the protective layer 240 and/or the temporary bonding layer only. In other words the deepened trenches 142 may in this case not be formed by the trenches 130 of the assembling structure 110.

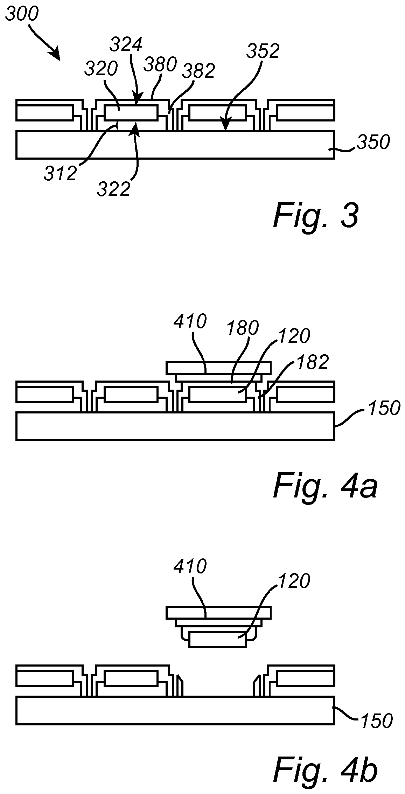

Referring to Fig. 3, an assembly 300 of optical structures 320 for transfer printing is described. The assembly 300 may correspond to the assembly of the plurality of optical structures 120 connected to the temporary carrier layer 150 via the encapsulating layer 180 either with the remaining portion 144 of the temporary bonding layer 140, as shown in Fig. 1g, or with the remaining portion 144 of the temporary bonding layer 140 being removed, as shown in Fig. 1h.

The assembly 300 comprises a temporary carrier layer 350. The assembly 300 comprises a plurality of optical structures 320 each comprising an interface surface 322 and an oppositely arranged back surface 324. The plurality of optical structures 320 being distributed horizontally from each other and being connected to the temporary carrier layer 350 by a respective encapsulating layer 380. The interface surface 322 of each of the plurality of optical structures 320 being substantially parallel to and facing a first side 352 of the temporary carrier layer 350.

For each one of the plurality of optical structures 320 of the assembly 300, the respective encapsulating layer 380 at least partially encapsulates the optical structure 320 and extends over the back surface 324 of the optical structure 320. The respective encapsulating structure 380 comprises at least one tether 382, the tether 382 being connected to the first side 352 of the temporary carrier layer 350.

The assembly 300 may be prepared according to the previously described method for preparing a plurality of optical structures 120 for transfer printing.

Referring to Fig. 4a-e, a method for transfer printing will be described. The method for transfer printing comprises at least the steps of obtaining the assembling structure 110, bonding the assembling structure to the temporary bonding layer 140 and to the temporary carrier layer 150, and removing a portion of the assembling structure 110 in order to form and separate the plurality of optical structures 120. The method for transfer printing may optionally comprise any other of the steps previously described in the method for preparing the plurality of optical structures 120 for transfer printing.

Referring to Fig.4a, the method for transfer printing may comprise releasably coupling at least one of the plurality of optical structures 120 to a stamp 410. The stamp 410 is configured to facilitate coupling and decoupling between the stamp 410 and the at least one of the plurality of optical structures 120. Coupling and decoupling of the stamp 410 may be mechanical employing for example Van der Waals forces, mechanical peeling and rate-dependent adhesion.

Referring to Fig. 4b, the method for transfer printing may comprise lifting the coupled at least one of the plurality of optical structures 120 from the temporary carrier layer 150 by breaking the at least one tether 182. In other words, the at least one of the plurality of optical structures 120 is no longer connected to the temporary carrier layer 150 as a result of being lifted by the stamp 410 and breaking of the at least one tether 182.

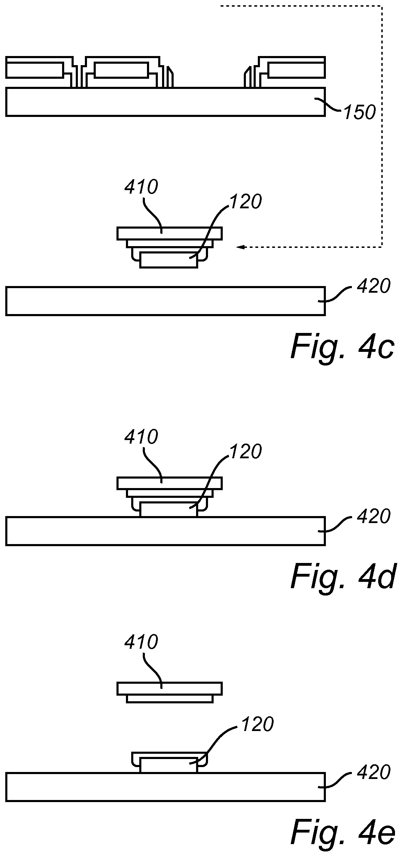

Referring to Fig. 4c, the method for transfer printing may comprise transferring the at least one of the plurality of optical structures 120 to a target substrate 420. The target substrate 420 may include one or more optical and/or electronic components such that the at least one of the plurality of optical structures 120 being transferred to the target substrate 420 may be coupled to one or more of said components.

Referring to Fig. 4d, the method for transfer printing may comprise depositing and bonding the transferred at least one of the plurality of optical structures 120 to the target substrate 420. Thereby, the at least one target device, such as for example an optoelectronic device, may be formed on the target substrate 420.

Referring to Fig. 4e, the method for transfer printing may comprise decoupling the stamp 410 from the transferred and bonded at least one of the plurality of optical structures 120. Decoupling may be facilitated by a binding strength between the target substrate 620 and the transferred and bonded at least one of the plurality of optical structures 120 that is stronger than a coupling strength between the stamp 410 and the at least one of the plurality of optical structures 120.

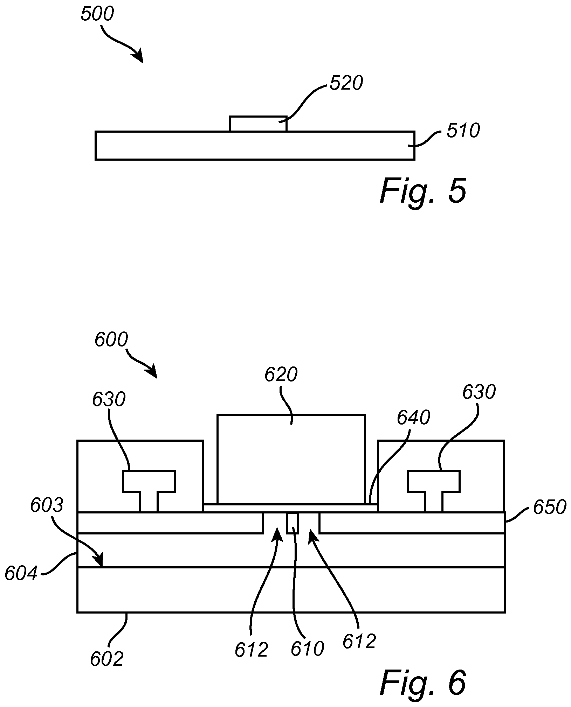

Referring to Fig. 5, an optoelectronic device 500 is described. The optoelectronic device comprises at least one optical structure 120, 520 where the optical structure 120, 520 has been prepared according to any embodiment of the above described method for preparing a plurality of optical structures 120, 520 for transfer printing, and subsequently transfer printed onto a target substrate 510 to form an optoelectronic device 500. The optical structure 120, 520 forms an optical component 520 of the optoelectronic device 500. Thus, the transfer printed optical structure 120, 520 may couple to one or more optical and/or electrical components on the target substrate 510 to form an optoelectronic device 500 comprising an optical component 520.

Fig. 6 illustrates one possible embodiment of an optoelectronic device 600 comprising an optical component 620 where the optoelectronic device 600 is an optical modulator 600. It should be understood that this embodiment exemplifies an optoelectronic device 500, 600 that comprises an optical structure 120, 320, 520, 620 that has been prepared according to method of preparing a plurality of optical structures 120, 320, 520, 620 for transfer printing, and subsequently transfer printed to the target substrate 420, 510, 602. However, the embodiment in no way limits the scope of the invention and simply serves to demonstrate one possible embodiment.

The optoelectronic device 600 according to the embodiment of Fig. 6 comprises a buried layer 604 arranged on a first surface 603 of a substrate 602. The substrate 602 may for example comprise silicon. The buried layer 604 may for example comprise silicon dioxide. The buried layer 604 comprises a first side arranged to face the first surface 603 of the substrate, and an oppositely arranged second side.

The optoelectronic device 600 comprises at least one waveguide 610 configured to allow electromagnetic radiation to propagate through the at least one waveguide 610. The waveguide 610 may be flanked by an electrically conductive semiconductor material 650, for example n-type silicon. The at least one waveguide 610 is arranged on the second side of the burried layer 604. The at least one waveguide 610 is arranged between at least two trenches 612 of the buried layer 604. On both the respective sides of the two trenches 612 where the waveguide 610 is not arranged, on the second side of the buried layer 604, a respective electrically conducting semiconductor material 650 is arranged.

At least two electrodes 630 are arranged to connect to the electrically conducting semiconductor material 650. The at least two electrodes 630 may be for example travelling-wave electrodes or lumped electrodes. The at least two electrodes 630 may comprise a metal, for example copper. The at least two electrode 630 may be configured to propagate a radio frequency (RF) signal or supply a DC signal.

A polymer film 640 may cover a portion of the waveguide 610 and the trenches 612. The polymer film 640 may comprise for example benzocyclobutene (BCB).

An optical structure 620 has been transfer printed to the polymer film 640 such that the polymer film 640 is arranged between and physically separates the waveguide 610 and the optical structure 620.

Alternatively, the optoelectronic device 600 comprises no polymer film 640, and the optical structure 620 is arranged on the waveguide 610 and the trenches 612 and bonded to the optoelectronic device by molecular bonding.

The transfer printed optical structure 620 forms an optical modulator 620 of the optoelectronic device 600 according to this embodiment. The optical modulator 620 is arranged to overlap trenches 612 between the at least one waveguide 610 and a respective electrically conducting semiconductor material 650.

The optoelectronic device 600 is configured so that the electromagnetic radiation propagating through the waveguide 610 interacts with the optical modulator material 620.

The optoelectronic device 600 is configured so that an RF signal propagating in the electrodes 630 or an applied DC signal induces an electric field in the waveguide 610. The induced electric field propagates in the waveguide 610, overlapping the electromagnetic radiation when the electromagnetic radiation is propagating through the waveguide 610. The electric field linearly changes the refractive index of the optical modulator 620 via the Pockels effect. The change in refractive index causes a phase shift in the electromagnetic radiation when the electromagnetic radiation passes through the optical modulator 620. The electromagnetic radiation may thus be modulated, i.e. phase shifted, as it passes through the optical modulator 620.

The optical material of the optical structure 620 transfer printed to form the optical modulator 620 may thus be chosen to control the modulating effect of the optical modulator 620. By maintaining a high-quality and pristine interface surface 122 of the optical structure 620 during the preparation for transfer printing, a high-quality interface can be formed between the optical modulator 620 and the optoelectronic device 600.

In the above the inventive concept has mainly been described with reference to a limited number of examples. However, as is readily appreciated by a person skilled in the art, other examples than the ones disclosed above are equally possible within the scope of the inventive concept, as defined by the appended claims.

## Claims

1. A method for preparing a plurality of optical structures (120) for transfer printing, said method comprising:
obtaining an assembling structure (110) comprising an optical material, wherein the assembling structure (110) comprises a pattern in the optical material, the pattern comprising trenches (130) at a first side (112) of the assembling structure (110) for defining the plurality of optical structures (120), each of the plurality of optical structures (120) comprising an interface surface (122) in the optical material, the interface surface (122) being arranged at the first side of the assembling structure (110);
bonding the assembling structure (110) to a temporary bonding layer (140) and a temporary carrier layer (150), wherein the interface surfaces (122) and the trenches (130) face the temporary bonding layer (140) and the temporary carrier layer (150), the temporary bonding layer (140) being arranged between the assembling structure (110) and the temporary carrier layer (150); and
removing a portion of the assembling structure (110) in order to form and separate the plurality of optical structures (120), wherein the plurality of optical structures (120) are defined for transfer printing from the temporary carrier layer (150).

2. The method according to claim 1, wherein the method comprises, prior to or during the bonding of the assembling structure (110), depositing a protective layer (240) to cover a first side (112) of the assembling structure (110), the first side (112) of the assembling structure comprising the interface surfaces (122) and the trenches (130) of the optical material.

3. The method according to claim 1 or claim 2, wherein the interface surface (122) is configured to be an optical interface.

4. The method according to any one of the previous claims, wherein obtaining the assembling structure (110) comprises forming the interface surfaces (122).

5. The method according to any one of the previous claims, wherein obtaining the assembling structure (110) comprises forming the pattern in the optical material at the first side (112) of the assembling structure (110) by forming the trenches (130) in the optical material at the first side (112) of the assembling structure (110).

6. The method according to claim 5, wherein forming the trenches (130) comprises selectively removing material from a first side (102) of a substrate (100) comprising the optical material.

7. The method according to any one of the previous claims, wherein removing a portion of the assembling structure (110) comprises thinning the assembling structure (110) by removing material of the assembling structure (110) from a second side (114) of the assembling structure (110) opposite the first side (112), wherein said thinning is performed at least until reaching a bottom (132) of the trenches (130) of the assembling structure (110).

8. The method according to any one of the previous claims, further comprising forming trenches (142) in the temporary bonding layer (140) by selectively removing a portion of the temporary bonding layer (140), the trenches (142) of the temporary bonding layer (140) extend from the trenches (130) of the assembling structure, thereby forming deepened trenches (160), wherein the temporary carrier layer (150) forms a bottom (162) of the deepened trenches (160), the deepened trenches (160) defining a plurality of remaining portions (144) of the temporary bonding layer (140) arranged between each respective one of the plurality of optical structures (120) and the temporary carrier layer (150).

9. The method according to claim 8, wherein forming trenches (142) in the temporary bonding layer (140) comprises exposing the temporary bonding layer (140) to electromagnetic radiation.

10. The method according to claim 8 or 9, further comprising depositing an encapsulating layer (180) on each one of the plurality of optical structures (120), the encapsulating layer (180) at least partially encapsulating each respective optical structure (120) and partially encapsulating each respective remaining portion (144) of the temporary bonding layer (140) and extending over a back surface (124) of each respective optical structure (120) arranged opposite the respective interface surface (122) and extending a full depth (164) of the deepened trenches (160), reaching the bottom (162) of the deepened trenches (160).

11. The method according to claim 9, further comprising under-etching and removing the respective remaining portion (144) of the temporary bonding layer (140) between each one of the plurality of optical structures (120) and the temporary carrier layer (150).

12. The method according to any one of the previous claims, wherein the optical material comprises barium titanate (BTO).

13. A method for transfer printing, said method comprising:
the method for preparing the plurality of optical structures (120) for transfer printing according to any one of the previous claims; and
transferring at least one of the plurality of optical structures (120) from the temporary carrier layer (150) to a target substrate (420).

14. An optoelectronic device (500), comprising at least one optical structure (120, 520) where the optical structure (120, 520) has been prepared by the method according to any one of claims 1-12 and subsequently transfer printed onto a target substrate (420, 510), the optical structure (120, 520) forming an optical component of the optoelectronic device (500).

15. An assembly (300) of optical structures (320) for transfer printing, the assembly (300) comprising:
a temporary carrier layer (350);
a plurality of optical structures (320), each one of the plurality of optical structures (320) comprising an interface surface (322) and a back surface (324), the plurality of optical structures (320) being distributed horizontally from each other and being connected to the temporary carrier layer (350) by a respective encapsulating layer (380), the interface surface (322) of each of the plurality of optical structures (320) being substantially parallel to and facing a first side (352) of the temporary carrier layer (350); and
for each one of the plurality of optical structures (320), the respective encapsulating layer (380) at least partially encapsulates the optical structure (320) and extends over the back surface (324) of the optical structure (320) and comprises at least one tether (382), the at least one tether (382) being connected to the first side (352) of the temporary carrier layer (350),
wherein the at least one tether (382) is configured to break when a sufficient lifting force is applied to the respective one of the plurality of optical structures (320) and the respective encapsulating layer (380) in order to facilitate lifting of the plurality of optical structures (320) from the temporary carrier layer (350).
